# EUROPEAN PATENT SPECIFICATION

(11) **EP 4 048 030 B1**
(45) Date of publication and mention of the grant of the patent: **14.06.2023**
(21) Application number: 22152202.2
(22) Date of filing: 19.01.2022
(51) Int. Cl.: H05B 45/31, H05B 45/10, H05B 45/20

(54) **SILICON-CONTROLLED-RECTIFIER DIAL DUAL-DIMMING DRIVE CIRCUIT, DIMMING DRIVE DEVICE AND LAMP**
SILIZIUMGESTEUERTE GLEICHRICHTERSKALA MIT DOPPELTER DIMM-ANSTEUERSCHALTUNG, DIMM-ANSTEUERVORRICHTUNG UND LAMPE
CIRCUIT DE COMMANDE À DOUBLE GRADATION À REDRESSEUR COMMANDÉ AU SILICIUM, DISPOSITIF DE COMMANDE DE GRADATION ET LAMPE

(30) Priority: 23.02.2021 CN 202110200281
(43) Date of publication of application: 24.08.2022
(73) Proprietor: Leedarson Lighting Co., Ltd., Zhangzhou, Fujian 363999 (CN)
(72) Inventor: WU, Yongqiang, Zhangzhou, FUJIAN, 363999 (CN); YE, Hemu, Zhangzhou, FUJIAN, 363999 (CN); LIN, Qiqiang, Zhangzhou, FUJIAN, 363999 (CN); LIU, Zongyuan, Zhangzhou, FUJIAN, 363999 (CN); LI, Yankun, Zhangzhou, FUJIAN, 363999 (CN)
(74) Representative: Chimini, Francesco

(56) References cited:
- US-A1- 2008 094 423

## Description

### Technical Field

The present application pertains to the field of lamp technologies, and particularly relates to a silicon-controlled-rectifier dial dual-dimming drive circuit, a dimming drive device and a lamp.

### Background Art

An LED lamp has advantages of a small volume, a high efficiency and a large current, and is widely applied to occasions, such as illumination, backlight, or the like. In a lighting system, it is a quite challenging task to dim various light sources. A dimming technology enables a user to adjust brightness of the light source according to actual needs, and may be utilized to lower the brightness of the light source in an application scenario without a requirement for strong light, thereby reducing consumption of electric energy and saving energy.

However, an existing controllable dimming lamp on the current market may only realize one dimming curve, resulting in single customer experience, and the dimming lamp is unable to simultaneously meet demands for the brightness and a color temperature in different application occasions. For example, in US 2008/094423 A1 a control knob acts as both an intensity control and as a colour (or 'mood') control for a solid state lighting unit in a single application.

### Summary

An object of embodiments of the present application is to provide a silicon-controlled-rectifier dial dual-dimming drive circuit, a dimming drive device and a lamp, so as to solve a technical problem that demands for brightness and a color temperature in different application occasions are unable to be met simultaneously in a prior art.

In order to achieve the above-mentioned object, the present application provides the following technical solution. There is provided a silicon-controlled-rectifier dial dual-dimming drive circuit, connected with a light source assembly, the silicon-controlled-rectifier dial dual-dimming drive circuit including:
a silicon-controlled-rectifier dimmer, configured to introduce an alternating current and set a corresponding conduction angle according to a silicon-controlled-rectifier control signal;
a rectifier module, connected with the silicon-controlled-rectifier dimmer and configured to rectify a voltage signal output by the silicon-controlled-rectifier dimmer to generate a direct current;
a dial switch module, configured to select a dimming and color-adjusting gear and output a color-adjusting control signal and a dimming control signal according to the dimming and color-adjusting gear;
a driving adjusting module, connected with the rectifier module, the dial switch module and the light source assembly and configured to receive the dimming control signal, collect a current output by the light source assembly and adjust the direct current according to the dimming control signal and a collection result;
a color-temperature control module, connected with the light source assembly and configured to adjust a current of each light emitting unit in the light source assembly according to different switching duty ratios;
a silicon-controlled-rectifier detection module, connected with the rectifier module and configured to detect the conduction angle of the silicon-controlled-rectifier dimmer according to the direct current and generate a silicon-controlled-rectifier conduction angle signal; and
a control module, connected with the dial switch module, the driving adjusting module, the color-temperature control module and the silicon-controlled-rectifier detection module, configured to generate a first pulse width modulation signal according to the color-adjusting control signal and send the first pulse width modulation signal to the color-temperature control module, so as to adjust the switching duty ratio of the color-temperature control module, and configured to generate a second pulse width modulation signal according to the silicon-controlled-rectifier conduction angle signal and send the second pulse width modulation signal to the driving adjusting module, so as to adjust the direct current.

In one embodiment, the silicon-controlled-rectifier dial dual-dimming drive circuit further includes:
a filtering module, connected with the rectifier module and the driving adjusting module, respectively, and configured to filter the direct current output by the rectifier module and output a filtered direct current voltage to the driving adjusting module.

In one embodiment, the silicon-controlled-rectifier dial dual-dimming drive circuit further includes:
an overcurrent protection module, connected with the rectifier module and configured to perform overcurrent protection on the alternating current.

In one embodiment, the silicon-controlled-rectifier dial dual-dimming drive circuit further includes:
a ripple removing module, connected with the driving adjusting module and the light source assembly, respectively, and configured to remove ripples in the direct current.

In one embodiment, the silicon-controlled-rectifier dial dual-dimming drive circuit further includes:
a power supply module, connected with the rectifier module and the control module, respectively, and configured to receive the direct current and perform voltage conversion on the direct current, so as to supply power to the control module.

In one embodiment, the dial switch module includes: a multi-gear selector switch, a plurality of color adjusting resistors and at least one dimming resistor; a common end of the multi-gear selector switch is grounded, a plurality of switching contacts of the multi-gear selector switch are connected with first ends of the plurality of color adjusting resistors and a first end of the at least one dimming resistor in one-to-one correspondence, second ends of the plurality of color adjusting resistors are jointly connected to the control module, and a second end of the at least one dimming resistor is connected with the driving adjusting module.

In one embodiment, the color-temperature control module includes:
an optical coupling unit, connected with the control module and configured to receive the first pulse width modulation signal and perform optical coupling isolation treatment on the first pulse width modulation signal; and
a switch unit, connected with the optical coupling unit and the light source assembly and configured to be switched according to the first pulse width modulation signal after the optical coupling isolation treatment, so as to adjust the current of each light emitting unit in the light source assembly.

In one embodiment, the switch unit includes: a switch tube, a voltage-regulator tube, a first voltage division resistor and a second voltage division resistor; a first end of the switch tube and a cathode of the voltage-regulator tube are jointly connected to one output end of the light source assembly, a first end of the first voltage division resistor is connected with an input end of the light source assembly, a second end of the first voltage division resistor, a first end of the second voltage division resistor and a control end of the switch tube are jointly connected to one switch signal output end of the control module, and a second end of the switch tube, an anode of the voltage-regulator tube and a second end of the second voltage division resistor are grounded jointly.

The embodiments of the present application further provide a dimming drive device, including the above-mentioned silicon-controlled-rectifier dial dual-dimming drive circuit.

The embodiments of the present application further provide a lamp, including: a light source assembly; and the above-mentioned silicon-controlled-rectifier dial dual-dimming drive circuit, the silicon-controlled-rectifier dial dual-dimming drive circuit being connected with the light source assembly.

The lamp according to the present application has the following beneficial effects. Compared with the prior art, the silicon-controlled-rectifier dimmer is adopted to set the corresponding conduction angle to regulate the alternating current, the dial switch module selects the dimming and color-adjusting gear to output the corresponding dimming control signal and color-adjusting control signal, the driving adjusting module adjusts the direct current output by the rectifier module according to the dimming control signal and the current output by the light source assembly, the control module generates the first pulse width modulation signal according to the color-adjusting control signal and sends the first pulse width modulation signal to the color-temperature control module, so as to adjust the switching duty ratio of the color-temperature control module, thereby adjusting the current output by the light source assembly, and the control module generates the second pulse width modulation signal according to the conduction angle of the silicon-controlled-rectifier dimmer and sends the second pulse width modulation signal to the driving adjusting module, so as to adjust the direct current, thereby simultaneously adjusting the brightness and the color temperature in different application occasions, and bringing experiences of double dimming curves and different color temperatures to a user.

### Brief Description of Drawings

To describe the technical solutions in the embodiments of the present application more clearly, the following briefly describes the accompanying drawings required for describing the embodiments or the prior art. Apparently, the accompanying drawings in the following description show merely some embodiments of the present application, and a person of ordinary skill in the art may still obtain other drawings from these accompanying drawings without creative efforts.
FIG. 1 is a circuit structure diagram of a silicon-controlled-rectifier dial dual-dimming drive circuit according to an embodiment of the present application;
FIG. 2 is a circuit structure diagram of another silicon-controlled-rectifier dial dual-dimming drive circuit according to an embodiment of the present application;
FIG. 3 is a circuit structure diagram of another silicon-controlled-rectifier dial dual-dimming drive circuit according to an embodiment of the present application;
FIG. 4 is a circuit structure diagram of another silicon-controlled-rectifier dial dual-dimming drive circuit according to an embodiment of the present application;
FIG. 5 is a circuit structure diagram of another silicon-controlled-rectifier dial dual-dimming drive circuit according to an embodiment of the present application;
FIG. 6 is a circuit structure diagram of a silicon-controlled-rectifier dial dual-dimming drive circuit according to an embodiment of the present application;
FIG. 7 is a circuit structure diagram of a power supply module according to an embodiment of the present application;
FIG. 8 is a circuit structure diagram of a control module according to an embodiment of the present application; and
FIG. 9 is a circuit structure diagram of a dial switch module according to an embodiment of the present application.

### Detailed Description of Embodiments

In order to make technical problems to be solved, technical solutions and beneficial effects of the present application more apparent, the present application will be described in further detail with reference to the following drawings and embodiments. It should be understood that the specific embodiments described herein are merely for explaining the present application and are not intended to limit the present application.

It should be noted that when an element is referred to as being "fixed on" or "provided at" another element, the element may be directly or indirectly located on the other element. When an element is referred to as being "connected to" another element, the element may be directly or indirectly connected to the other element.

It should be understood that, orientations or positional relationships indicated by terms "length", "width", "upper", "lower", "front", "rear", "left", "right", "vertical", "horizontal", "top", "bottom", "inner", "outer" etc. are based on orientations or positional relationships shown in the accompanying drawings, and they are used only for describing the present application and for description simplicity, but do not indicate or imply that an indicated device or element must be in a specific orientation or be constructed and operated in a specific orientation. Therefore, it cannot be understood as a limitation on the present application.

In addition, the terms such as "first" and "second" are used merely for purposes of description and are not intended to indicate or imply relative importance, or to imply the number of indicated technical features. Thus, the feature defined with "first" and "second" may include one or more of this feature explicitly or implicitly. In the description of the present application, "a plurality of" means two or more unless otherwise specified explicitly.

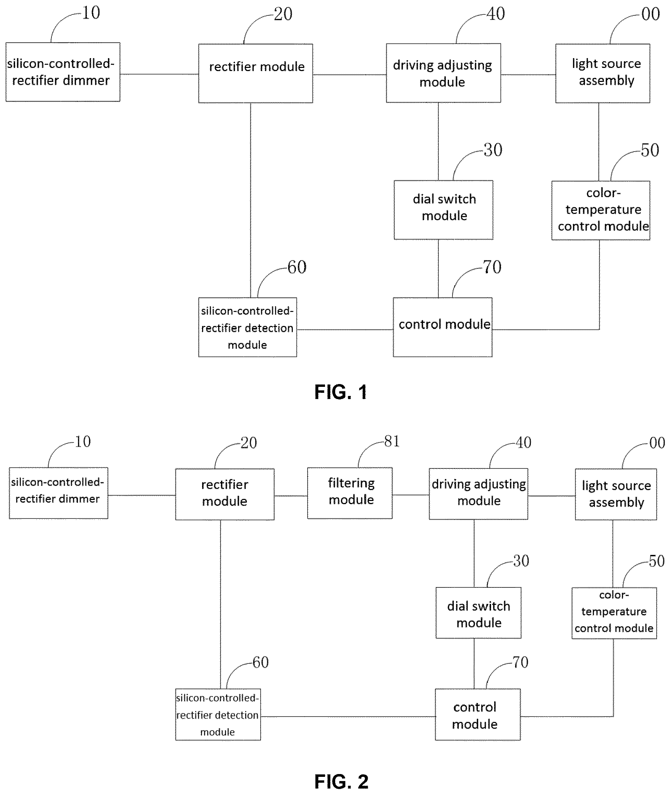

Embodiments of the present application provide a silicon-controlled-rectifier dial dual-dimming drive circuit, and as shown in FIG. 1, the silicon-controlled-rectifier dial dual-dimming drive circuit is connected with a light source assembly 00; specifically, the silicon-controlled-rectifier dial dual-dimming drive circuit includes: a silicon-controlled-rectifier dimmer 10, a rectifier module 20, a dial switch module 30, a driving adjusting module 40, a color-temperature control module 50, a silicon-controlled-rectifier detection module 60 and a control module 70, wherein the silicon-controlled-rectifier dimmer 10 is configured to introduce an alternating current and set a corresponding conduction angle according to a silicon-controlled-rectifier control signal; the rectifier module 20 is connected with the silicon-controlled-rectifier dimmer 10 and configured to rectify a voltage signal output by the silicon-controlled-rectifier dimmer 10 to generate a direct current; the dial switch module 30 is configured to select a dimming and color-adjusting gear and output a color-adjusting control signal and a dimming control signal according to the dimming and color-adjusting gear; the driving adjusting module 40 is connected with the rectifier module 20, the dial switch module 30 and the light source assembly 00 and configured to receive the dimming control signal, collect a current output by the light source assembly 00 and adjust the direct current according to the dimming control signal and a collection result; the color-temperature control module 50 is connected with the light source assembly 00 and configured to adjust a current of each light emitting unit in the light source assembly 00 according to different switching duty ratios; the silicon-controlled-rectifier detection module 60 is connected with the rectifier module 20 and configured to detect the conduction angle of the silicon-controlled-rectifier dimmer 10 according to the direct current and generate a silicon-controlled-rectifier conduction angle signal; and the control module 70 is connected with the dial switch module 30, the driving adjusting module 40, the color-temperature control module 50 and the silicon-controlled-rectifier detection module 60, configured to generate a first pulse width modulation signal according to the color-adjusting control signal and send the first pulse width modulation signal to the color-temperature control module 50, so as to adjust the switching duty ratio of the color-temperature control module 50, and configured to generate a second pulse width modulation signal according to the silicon-controlled-rectifier conduction angle signal and send the second pulse width modulation signal to the driving adjusting module 40, so as to adjust the direct current.

In the present embodiment, the silicon-controlled-rectifier dimmer 10 is adopted to set the corresponding conduction angle to regulate the alternating current; the dial switch module 30 selects the dimming and color-adjusting gear to output the corresponding dimming control signal and color-adjusting control signal, wherein the dimming control signal is used for setting a dimming stroke of the driving adjusting module 40, and the color-adjusting control signal is used for setting a color temperature of the light source assembly 00; specifically, the driving adjusting module 40 adjusts the direct current output by the rectifier module 20 according to the dimming control signal and the current output by the light source assembly 00, so as to implement dimming control for the light source assembly 00; the control module 70 generates the first pulse width modulation signal according to the color-adjusting control signal and sends the first pulse width modulation signal to the color-temperature control module 50, so as to adjust the switching duty ratio of the color-temperature control module 50, thereby adjusting the current output by each light emitting unit in the light source assembly 00 and realizing color temperature control for the light source assembly 00; the silicon-controlled-rectifier detection module 60 is configured to detect a dimming angle of the silicon-controlled-rectifier dimmer 10, convert an analog signal into a digital signal, and generate the silicon-controlled-rectifier conduction angle signal according to the conduction angle of the silicon-controlled-rectifier dimmer 10; the control module 70 generates the second pulse width modulation signal according to the conduction angle of the silicon-controlled-rectifier dimmer 10 and sends the second pulse width modulation signal to the driving adjusting module 40, so as to adjust the direct current, thereby simultaneously adjusting brightness and a color temperature in different application occasions, and bringing experiences of double dimming curves and different color temperatures to a user.

In one embodiment, the dial switch module 30 may output multiple levels of color-adjusting control signals, and is configured to provide a color temperature switching signal for the control module 70, the dial switch module 30 may further output at least one dimming control signal, and the control module 70 switches the dimming curve based on the dimming control signal, then the dimming curve is switched, so as to implement dimming operations according to the two dimming curves; for example, when the dimming stroke of the silicon-controlled-rectifier dimmer 10 is changed within a range of 0% to 100%, an output current of the driving adjusting module 40 is controlled to be correspondingly changed within a range of 0% to 100%, when the dimming stroke of the silicon-controlled-rectifier dimmer 10 is changed within a range of 0% to 50%, the output current is correspondingly changed within a range of 0% to 100%, and when the dimming stroke of the silicon-controlled-rectifier dimmer 10 is within a range of 50% to 100%, the output current is constantly kept at 100%.

In one embodiment, as shown in FIG. 2, the silicon-controlled-rectifier dial dual-dimming drive circuit further includes a filtering module 81, which is respectively connected with the rectifier module 20 and the driving adjusting module 40 and configured to filter the direct current output by the rectifier module 20 and output a filtered direct current voltage to the driving adjusting module 40.

In the present embodiment, the direct current output by the rectifier module 20 is filtered by the filtering module 81 to eliminate clutter, such as spikes, or the like, in the direct current.

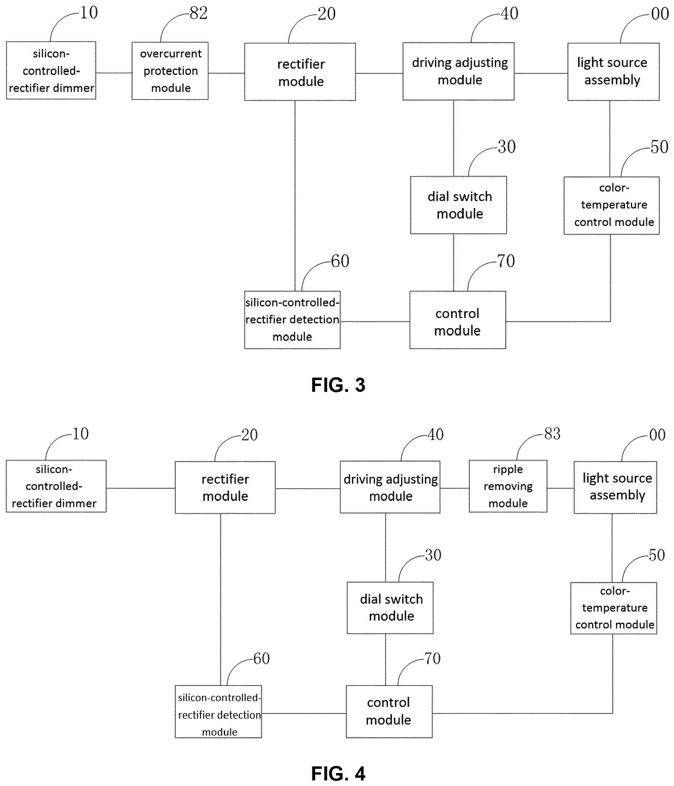

In one embodiment, as shown in FIG. 3, the silicon-controlled-rectifier dial dual-dimming drive circuit further includes an overcurrent protection module 82, which is connected with the rectifier module 20 and configured to perform overcurrent protection on the alternating current.

In the present embodiment, the overcurrent protection module 82 is provided before the rectifier module 20 to perform overcurrent protection on a subsequent circuit, so as to prevent an excessive alternating current from damaging the subsequent circuit.

In one embodiment, as shown in FIG. 4, the silicon-controlled-rectifier dial dual-dimming drive circuit further includes a ripple removing module 83, which is respectively connected with the driving adjusting module 40 and the light source assembly 00 and configured to remove ripples in the direct current.

In the present embodiment, the ripple removing module 83 is provided between the driving adjusting module 40 and the light source assembly 00, so as to remove the ripples in the direct current, and avoid a flicker phenomenon occurring when the light source assembly 00 is turned on.

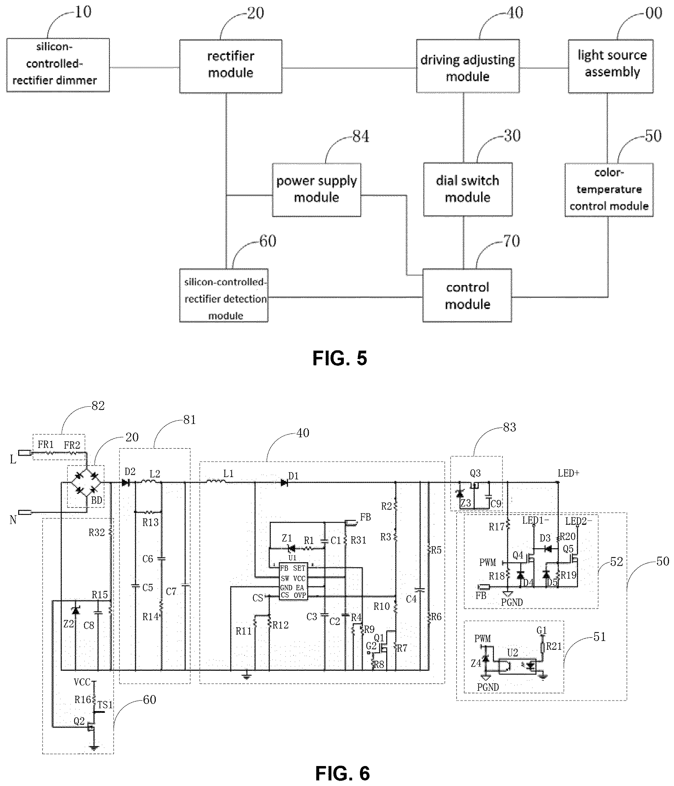

In one embodiment, as shown in FIG. 5, the silicon-controlled-rectifier dial dual-dimming drive circuit further includes a power supply module 84, which is respectively connected with the rectifier module 20 and the control module 70 and configured to receive the direct current and perform voltage conversion on the direct current, so as to supply power to the control module 70.

In the present embodiment, the power supply module 84 obtains power from the rectifier module 20, and performs the voltage conversion on the rectified direct current to supply power to the control module 70; further, the power supply module 84 may further output multiple different voltages to supply power to other functional modules in the silicon-controlled-rectifier dial dual-dimming drive circuit.

In one embodiment, as shown in FIG. 6, the color-temperature control module 50 includes: an optical coupling unit 51 and a switch unit 52, wherein the optical coupling unit 51 is connected with the control module 70 and configured to receive the first pulse width modulation signal and perform optical coupling isolation treatment on the first pulse width modulation signal; and the switch unit 52 is connected with the optical coupling unit 51 and the light source assembly 00 and configured to be switched according to the first pulse width modulation signal after the optical coupling isolation treatment, so as to adjust the current of each light emitting unit in the light source assembly 00.

In the present embodiment, the optical coupling unit 51 may perform the optical coupling isolation treatment on the first pulse width modulation signal output by the control module 70, and insulation setting and unidirectional transmission setting between input and output enhance an anti-interference capability in the color-temperature adjustment process.

In one embodiment, as shown in FIG. 6, the driving adjusting module 40 includes: a first inductor L1, a first diode D1, a constant-current driving chip U1, a first resistor R1, a second resistor R2, a third resistor R3, a fourth resistor R4, a fifth resistor R5, a sixth resistor R6, a seventh resistor R7, an eighth resistor R8, a ninth resistor R9, a tenth resistor R10, an eleventh resistor R11, a twelfth resistor R12, a thirty-first resistor R31, a first voltage-regulator tube Z1, a first capacitor C1, a second capacitor C2, a third capacitor C3, a first switch tube Q1 and a fourth capacitor C4, wherein a first end of the first inductor L1 is connected with the filtering module 81, a second end of the first inductor L1, an anode of the first diode D1, and a SW pin of the constant-current driving chip U1 are connected together, an FB pin of the constant-current driving chip U1, a cathode of the first voltage-regulator tube Z1, a first end of the first capacitor C1 and a first end of the thirty-first resistor R31 are connected together to form a voltage feedback signal input end FB of the driving adjusting module 40, an anode of the first voltage-regulator tube Z1 is connected with a first end of the first resistor R1, a second end of the first resistor R1, a second end of the first capacitor C1 and a first end of the third capacitor C3 are jointly connected to an EA pin of the constant-current driving chip U1, a second end of the thirty-first resistor R31 and a first end of the second capacitor C2 are jointly connected to a VCC pin of the constant-current driving chip U1, an SET pin of the constant-current driving chip U1, a first end of the fourth resistor R4 and a first end of the ninth resistor R9 are connected together, an OVP pin of the constant-current driving chip U1, a first end of the third resistor R3 and a first end of the tenth resistor R10 are connected together, a second end of the tenth resistor R10, a first end of the seventh resistor R7 and a first end of the first switch tube Q1 are connected together, a control end of the first switch tube Q1 and a first end of the eighth resistor R8 are connected with a second pulse width modulation signal output end G2 of the control module 70, a CS pin of the constant-current driving chip U1, a first end of the eleventh resistor R11, and a first end of the twelfth resistor R12 are jointly connected to a dimming control signal end CS of the dial switch module 30, a grounding pin GND of the constant-current driving chip U1, a second end of the eleventh resistor R11, a second end of the twelfth resistor R12, a second end of the third capacitor C3, a second end of the second capacitor C2, a second end of the fourth resistor R4, a second end of the ninth resistor R9, a second end of the eighth resistor R8, a second end of the seventh resistor R7, a first end of the fourth capacitor C4 and a first end of the sixth resistor R6 are grounded jointly, a second end of the sixth resistor R6 is connected with a first end of the fifth resistor R5, a second end of the third resistor R3 is connected with a first end of the second resistor R2, and a second end of the second resistor R2, a cathode of the first diode D1, a second end of the fourth capacitor C4, and a second end of the fifth resistor R5 are jointly connected to the ripple removing module 83.

In the present embodiment, the constant-current driving chip U1 and a peripheral circuit thereof constitute a main circuit to provide a constant working current for the light source assembly 00; the CS pin of the constant-current driving chip U1 is connected with the dimming control signal end CS of the dial switch module 30, the dimming control signal output by the dial switch module 30 is received by the CS pin to set the corresponding dimming curve, and a voltage feedback signal is received by the FB pin to adjust the direct current.

In one embodiment, as shown in FIG. 6, the filtering module 81 includes: a second diode D2, a second inductor L2, a thirteenth resistor R13, a fifth capacitor C5, a sixth capacitor C6, a seventh capacitor C7, and a fourteenth resistor R14, wherein an anode of the second diode D2 is connected with the rectifier module 20, a cathode of the second diode D2, a first end of the second inductor L2, a first end of the thirteenth resistor R13 and a first end of the fifth capacitor C5 are connected together, a second end of the second inductor L2, a second end of the thirteenth resistor R13, a first end of the sixth capacitor C6, and a first end of the seventh capacitor C7 are jointly connected to the driving adjusting module 40, a second end of the sixth capacitor C6 is connected with a first end of the fourteenth resistor R14, and a second end of the fifth capacitor C5, a second end of the fourteenth resistor R14 and a second end of the seventh capacitor C7 are grounded jointly.

In the present embodiment, the second diode D2, the second inductor L2, the thirteenth resistor R13, the fifth capacitor C5, the sixth capacitor C6, the seventh capacitor C7, the thirteenth resistor R13, and the fourteenth resistor R14 form a filtering circuit to filter the direct current output by the rectifier module 20.

In one embodiment, as shown in FIG. 6, the rectifier module 20 may include a rectifier bridge BD, a first input end of the rectifier bridge BD is connected with a live line L by the overcurrent protection module 82, a second input end of the rectifier bridge BD is connected with a null line N, a first output end of the rectifier bridge BD is connected with the filtering module 81, and a second output end of the rectifier bridge BD is grounded.

In one embodiment, as shown in FIG. 6, the silicon-controlled-rectifier detection module 60 includes: a fifteenth resistor R15, a sixteenth resistor R16, a second switch tube Q2, a second voltage-regulator tube Z2, an eighth capacitor C8 and a thirty-second resistor R32, wherein a first end of the thirty-second resistor R32 is connected with the rectifier module 20, a second end of the thirty-second resistor R32, a first end of the fifteenth resistor R15, a first end of the eighth capacitor C8, a cathode of the second voltage-regulator tube Z2 and a control end of the second switch tube Q2 are connected together, an anode of the second voltage-regulator tube Z2, a second end of the eighth capacitor C8 and a second end of the fifteenth resistor R15 are grounded jointly, a first end of the second switch tube Q2 and a first end of the sixteenth resistor R16 are both connected to a silicon-controlled-rectifier conduction angle signal input end of the control module 70, a second end of the second switch tube Q2 is grounded, and a second end of the sixteenth resistor R16 is connected to a power supply end.

In the present embodiment, a silicon-controlled-rectifier conduction angle detection circuit is formed by the fifteenth resistor R15, the sixteenth resistor R16, the second switch tube Q2, the second voltage-regulator tube Z2, the eighth capacitor C8, the thirty-second resistor R32, and the analog signal is converted into the corresponding digital signal to be sent to the control module 70, and the control module 70 performs a logic operation based on the received silicon-controlled-rectifier conduction angle signal and the dimming control signal output by the dial switch module 30, so as to adjust the direct current.

In one embodiment, the second switch tube Q2 is an N-type MOS transistor.

In one embodiment, as shown in FIG. 6, the overcurrent protection module 82 includes a first fuse FR1 and a second fuse FR2, the first fuse FR1 is connected in series with the second fuse FR2, a first end of the first fuse FR1 is connected with the live line, a second end of the first fuse FR1 is connected with a first end of the second fuse FR2, and a second end of the second fuse FR2 is connected with the filtering module 81.

In the present embodiment, an overcurrent protection circuit is formed by connecting the first fuse FR1 and the second fuse FR2 in series, so as to perform dual overcurrent protection on the input alternating current, and any one of the first fuse FR1 and the second fuse FR2 may be blown out due to an overcurrent, so as to protect the subsequent circuit.

In one embodiment, as shown in FIG. 6, the ripple removing module 83 includes: a third switch tube Q3, a third voltage-regulator tube Z3 and a ninth capacitor C9, wherein a cathode of the third voltage-regulator tube Z3 and a first end of the third switch tube Q3 are connected with the driving adjusting module 40, an anode of the third voltage-regulator tube Z3, a control end of the third switch tube Q3 and a first end of the ninth capacitor C9 are connected together, and a second end of the third switch tube Q3 and a second end of the ninth capacitor C9 are jointly connected to a positive pole end LED+ of the light source assembly 00.

In one embodiment, the third switch tube Q3 may be an N-type MOS transistor.

In one embodiment, the switch unit 52 includes: a switch tube, a voltage-regulator tube, a first voltage division resistor and a second voltage division resistor; a first end of the switch tube and a cathode of the voltage-regulator tube are jointly connected to one output end of the light source assembly 00, a first end of the first voltage division resistor is connected with an input end of the light source assembly 00, a second end of the first voltage division resistor, a first end of the second voltage division resistor and a control end of the switch tube are jointly connected to one switch signal output end of the control module 70, and a second end of the switch tube, an anode of the voltage-regulator tube and a second end of the second voltage division resistor are grounded jointly.

In the present embodiment, a voltage division circuit is formed by the first voltage division resistor and the second voltage division resistor to perform voltage division treatment on an input voltage signal, and then, the signal after the voltage division treatment is sent to the control end of the switch tube to control the switch tube to be turned on and off, the first end of the switch tube is connected with one negative pole end of the light source assembly 00, and the a plurality of light emitting units of the light source assembly 00 are connected with the negative pole ends in one-to-one correspondence.

In one embodiment, as shown in FIG. 6, the optical coupling unit 51 includes: an optical coupling chip U2, a fourth voltage-regulator tube Z4, and a twenty-first resistor R21, wherein a first end of the twenty-first resistor R21 is connected with a first pulse width modulation signal output end G1 of the control module 70, a second end of the twenty-first resistor R21 is connected with a first input pin of the optical coupling chip U2, a second input pin of the optical coupling chip U2 is grounded, a first output end of the optical coupling chip U2 and a cathode of the fourth voltage-regulator tube Z4 are jointly connected to the switch unit 52, and a second output end of the optical coupling chip U2 and an anode of the fourth voltage-regulator tube Z4 are jointly connected to a common grounding end PGND.

In one embodiment, as shown in FIG. 6, the switch unit 52 includes: a fourth switch tube Q4, a fifth switch tube Q5, a third diode D3, a fourth diode D4, a fifth diode D5, an eighteenth resistor R18, a nineteenth resistor R19, a twentieth resistor R20 and a seventeenth resistor R17, wherein a first end of the seventeenth resistor R17 is connected with the positive pole end LED+ of the light source assembly 00, a second end of the seventeenth resistor R17, a control end of the fourth switch tube Q4, a cathode of the fourth diode D4 and a first end of the eighteenth resistor R18 are jointly connected to the optical coupling unit 51, a first end of the fourth switch tube Q4 and a cathode of the third diode D3 are jointly connected to a first negative pole end LED1- of the light source assembly 00, an anode of the third diode D3, a control end of the fifth switch tube Q5, a cathode of the fifth diode D5, a first end of the nineteenth resistor R19 and a first end of the twentieth resistor R20 are connected together, a first end of the fifth switch tube Q5 is connected with a second negative pole end LED2- of the light source assembly 00, and a second end of the eighteenth resistor R18, an anode of the fourth diode D4, an anode of the fifth diode D5, a second end of the nineteenth resistor R19, a second end of the fifth switch tube Q5, and the common grounding end PGND are jointly connected to the voltage feedback signal input end FB of the driving adjusting module 40.

In one embodiment, the common grounding end PGND may be grounded by a resistor.

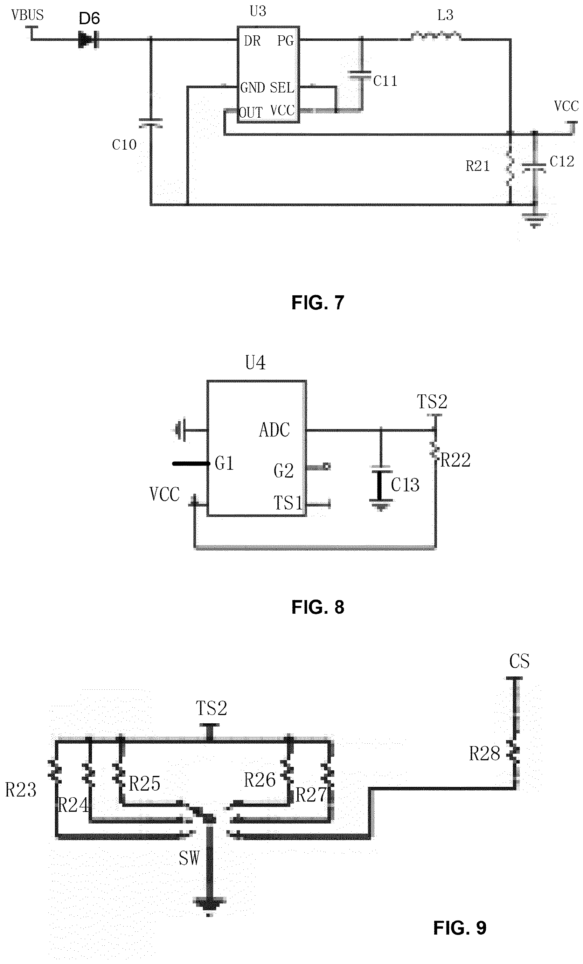

In one embodiment, as shown in FIG. 7, the power supply module 84 includes: a sixth diode D6, a tenth capacitor C10, an eleventh capacitor C11, a third inductor L3, a twelfth capacitor C12, a twenty-first resistor R21 and a power supply chip U3, wherein an anode of the sixth diode D6 is connected with an output end VBUS of the rectifier module 20, an input pin DR of the power supply chip U3, a cathode of the sixth diode D6, and a first end of the tenth capacitor C10 are connected together, a PG pin of the power supply chip U3, a first end of the eleventh capacitor C11 and a first end of the third inductor L3 are connected together, an SEL pin and a VCC pin of the power supply chip U3 are jointly connected to a second end of the eleventh capacitor C11, an output pin OUT of the power supply chip U3, a second end of the third inductor L3, a first end of the twenty-first resistor R21 and a first end of the twelfth capacitor C12 are connected together to form a power supply end VCC, and a second end of the tenth capacitor C10, a second end of the twenty-first resistor R21, and a second end of the twelfth capacitor C12 are grounded.

In the present embodiment, the power supply chip U3 and a peripheral circuit thereof form a voltage conversion circuit which converts the direct current into at least one voltage to supply power to the control module 70 or other functional modules.

In one embodiment, as shown in FIG. 8, the control module 70 includes: a main control chip U4, a thirteenth capacitor C13, and a twenty-second resistor R22, wherein an ADC pin of the main control chip U4, a first end of the thirteenth capacitor C13 and a first end of the twenty-second resistor R22 are jointly connected to a color-adjusting control signal output end TS2 of the dial switch module 30, a second end of the thirteenth capacitor C13 is grounded, a power supply pin of the main control chip U4 and a second end of the twenty-second resistor R22 are jointly connected to the power supply end VCC, a first pulse width modulation signal output end of the main control chip U4 forms the first pulse width modulation signal output end G1 of the control module 70, a second pulse width modulation signal output end of the main control chip U4 forms the second pulse width modulation signal output end G2 of the control module 70, and a silicon-controlled-rectifier conduction angle signal input end of the main control chip U4 forms the silicon-controlled-rectifier conduction angle signal input end TS1 of the control module 70.

In one embodiment, the dial switch module 30 includes: a multi-gear selector switch, a plurality of color adjusting resistors and at least one dimming resistor, wherein a common end of the multi-gear selector switch is grounded, a plurality of switching contacts of the multi-gear selector switch are connected with first ends of the plurality of color adjusting resistors and a first end of the at least one dimming resistor in one-to-one correspondence, second ends of the plurality of color adjusting resistors are jointly connected to the control module 70, and a second end of the at least one dimming resistor is connected with the driving adjusting module 40.

In one embodiment, as shown in FIG. 9, the dial switch module 30 includes: a multi-gear selector switch SW, a twenty-third resistor R23, a twenty-fourth resistor R24, a twenty-fifth resistor R25, a twenty-sixth resistor R26, a twenty-seventh resistor R27 and a twenty-eighth resistor R28, wherein first ends of the twenty-third resistor R23, the twenty-fourth resistor R24, the twenty-fifth resistor R25, the twenty-sixth resistor R26 and the twenty-seventh resistor R27 are jointly connected to the color-adjusting control signal input end TS2 of the control module 70, second ends of the twenty-third resistor R23, the twenty-fourth resistor R24, the twenty-fifth resistor R25, the twenty-sixth resistor R26 and the twenty-seventh resistor R27 are connected with a first switching contact, a second switching contact, a third switching contact, a fourth switching contact and a fifth switching contact of the multi-gear selector switch SW in one-to-one correspondence, a sixth switching contact of the multi-gear selector switch SW is connected with a first end of the twenty-eighth resistor R28, and a second end of the twenty-eighth resistor R28 is connected with the dimming control signal input end CS of the driving adjusting module 40.

In the present embodiment, when the multi-gear selector switch SW is at first five gears, that is, when the multi-gear selector switch SW is switched among the first switching contact, the second switching contact, the third switching contact, the fourth switching contact and the fifth switching contact, the ADC pin of the main control chip U4 detects, by a TS2 port, different voltage values corresponding to five levels of signals of the multi-gear selector switch SW; that is, V_{TS2}=5V*Rx/(Rx+R22), with Rx being a resistance value of resistor connected to the selector switch in the twenty-third resistor R23, the twenty-fourth resistor R24, the twenty-fifth resistor R25, the twenty-sixth resistor R26 and the twenty-seventh resistor R27, R22 being a resistance value of the twenty-second resistor R22, and V_{TS2} being a voltage of the color-adjusting control signal. When a dial switch is changed to different Rx values, the main control chip U4 obtains different voltage values by the TS2, and calls different internal programs based on the voltage values, so as to output different first pulse width modulation signals to the port G1, such that different whole-lamp color temperature results may be obtained by controlling the duty ratios of the plurality of light emitting units in the light source assembly 00. At this point, the silicon-controlled-rectifier angle detection signal TS1 does not participate in judgment logic processing output of the main control chip U4.

When the dial switch module 30 performs the five-gear color-adjusting control, the twenty-eighth resistor R28 floats and is not grounded, and a driving peak limiting current=0.3V/(R11//R12), with R11//R12 being a resistance value after the eleventh resistor R11 and the twelfth resistor R12 are connected in parallel. At this point, the output current changes correspondingly from 0% to 100% along with changes of the dimming stroke of a silicon controlled rectifier. During the five-gear color-adjusting control, the signal detected by the TS1 does not participate in the logic output of the main control chip U4, and the main control chip U4 ignores changes of information obtained by the TS1 port.

When the dial switch module 30 is changed to a sixth gear, that is, when the twenty-eighth resistor R28 is connected to the multi-gear selector switch SW, the twenty-eighth resistor R28 is connected in parallel with the eleventh resistor R11 and the twelfth resistor R12, V_{TS2}=5V, and the main control chip U4 starts to detect the duty ratio of the TS1 at the same time. A change of a dimming angle of the silicon controlled rectifier changes the duty ratio of the TS1, such that the analog signal is converted into the digital signal to be transmitted to the main control chip U4 for detection. When the stroke of a silicon-controlled-rectifier controller ranges from 0% to 50%, since the twenty-eighth resistor R28 is connected to the CS pin, the driving peak limiting current is increased to 0.3/(R11//R12//R28), with R11//R12//R28 being a resistance value after the eleventh resistor R11, the twelfth resistor R12 and the twenty-eighth resistor R28 are connected in parallel, the output current is correspondingly changed from 0% to 100%, and simultaneously, the G1 synchronously outputs a PWM signal changed corresponding to the duty ratio of 100% to 50%, and dimming and color adjustment are realized at this stage. When the stroke of the silicon-controlled-rectifier controller is from 50% to 100%, the output current is not changed any more due to the connection of the twenty-eighth resistor R28, the G1 outputs a PWM signal changed corresponding to the duty ratio of 50% to 0% at the same time, and at this stage, only color adjustment is realized, and no dimming is realized.

In one embodiment, the multi-gear selector switch SW may be a dial switch.

The embodiments of the present application further provide a dimming drive device, including the above-mentioned silicon-controlled-rectifier dial dual-dimming drive circuit.

The embodiments of the present application further provide a lamp, including: a light source assembly 00; and the above-mentioned silicon-controlled-rectifier dial dual-dimming drive circuit, the silicon-controlled-rectifier dial dual-dimming drive circuit being connected with the light source assembly 00.

The lamp according to the present application has the following beneficial effects. Compared with the prior art, the silicon-controlled-rectifier dimmer is adopted to set the corresponding conduction angle to regulate the alternating current, the dial switch module selects the dimming and color-adjusting gear to output the corresponding dimming control signal and color-adjusting control signal, the driving adjusting module adjusts the direct current output by the rectifier module according to the dimming control signal and the current output by the light source assembly, the control module generates the first pulse width modulation signal according to the color-adjusting control signal and sends the first pulse width modulation signal to the color-temperature control module, so as to adjust the switching duty ratio of the color-temperature control module, thereby adjusting the current output by the light source assembly, and the control module generates the second pulse width modulation signal according to the conduction angle of the silicon-controlled-rectifier dimmer and sends the second pulse width modulation signal to the driving adjusting module, so as to adjust the direct current, thereby simultaneously adjusting the brightness and the color temperature in different application occasions, and bringing experiences of double dimming curves and different color temperatures to a user

The above descriptions are merely preferred embodiments of the application and are not intended to restrict the application.

## Claims

1. A silicon-controlled-rectifier dial dual-dimming drive circuit for a light source assembly (00), the silicon-controlled-rectifier dial dual-dimming drive circuit comprising:
a silicon-controlled-rectifier dimmer (10), configured to introduce an alternating current and set a corresponding conduction angle according to a silicon-controlled-rectifier control signal;
a rectifier module (20), connected with the silicon-controlled-rectifier dimmer (10) and configured to rectify a voltage signal output by the silicon-controlled-rectifier dimmer (10) to generate a direct current;
a dial switch module (30), configured to select a dimming and color-adjusting gear and output a color-adjusting control signal and a dimming control signal according to the dimming and color-adjusting gear;
a color-temperature control module (50), adapted to be connected with the light source assembly (00) and configured to adjust a current of each light emitting unit in the light source assembly (00) according to different switching duty ratios;
a silicon-controlled-rectifier detection module (60), connected with the rectifier module (20) and configured to detect the conduction angle of the silicon-controlled-rectifier dimmer (10) according to the direct current and generate a silicon-controlled-rectifier conduction angle signal; and **characterised by**:
a driving adjusting module (40), connected with the rectifier module (20), the dial switch module (30) and the light source assembly (00) and configured to receive the dimming control signal, collect a current output by the light source assembly (00) and adjust the direct current according to the dimming control signal and a collection result; and
a control module (70), connected with the dial switch module (30), the driving adjusting module (40), the color-temperature control module (50) and the silicon-controlled-rectifier detection module (60), configured to generate a first pulse width modulation signal according to the color-adjusting control signal and send the first pulse width modulation signal to the color-temperature control module (50) so as to adjust a switching duty ratio of the color-temperature control module (50), and further configured to generate a second pulse width modulation signal according to the silicon-controlled-rectifier conduction angle signal and send the second pulse width modulation signal to the driving adjusting module (40) so as to adjust the direct current.

2. The silicon-controlled-rectifier dial dual-dimming drive circuit according to claim 1, further comprising:
a filtering module (81), connected with the rectifier module (20) and the driving adjusting module (40), respectively, and configured to filter direct current output by the rectifier module (20) and output a filtered direct current voltage to the driving adjusting module (40).

3. The silicon-controlled-rectifier dial dual-dimming drive circuit according to claim 1, further comprising:
an overcurrent protection module (82), connected with the rectifier module (20) and configured to perform overcurrent protection on the alternating current.

4. The silicon-controlled-rectifier dial dual-dimming drive circuit according to claim 1, further comprising: a ripple removing module (83), connected with the driving adjusting module (40) and connectable to the light source assembly (00), and configured to remove ripples in the direct current.

5. The silicon-controlled-rectifier dial dual-dimming drive circuit according to claim 1, further comprising:
a power supply module (84), connected with the rectifier module (20) and the control module (70), respectively, and configured to receive the direct current and perform voltage conversion on the direct current, so as to supply power to the control module (70).

6. The silicon-controlled-rectifier dial dual-dimming drive circuit according to claim 1, wherein the dial switch module (30) comprises: a multi-gear selector switch, a plurality of color adjusting resistors and at least one dimming resistor, wherein a common end of the multi-gear selector switch is grounded, a plurality of switching contacts of the multi-gear selector switch are connected with first ends of the plurality of color adjusting resistors and a first end of the at least one dimming resistor in one-to-one correspondence, second ends of the plurality of color adjusting resistors are jointly connected to the control module (70), and a second end of the at least one dimming resistor is connected with the driving adjusting module (40).

7. The silicon-controlled-rectifier dial dual-dimming drive circuit according to claim 1, wherein the color-temperature control module (50) comprises:
an optical coupling unit, connected with the control module (70) and configured to receive the first pulse width modulation signal and perform optical coupling isolation treatment on the first pulse width modulation signal; and
a switch unit, connected with the optical coupling unit and the light source assembly (00) and configured to be switched according to the first pulse width modulation signal after the optical coupling isolation treatment, so as to adjust current of each light emitting unit in the light source assembly (00).

8. The silicon-controlled-rectifier dial dual-dimming drive circuit according to claim 7, wherein the switch unit comprises: a switch tube (Q4), for example a transistor; a voltage-regulator tube, for example a Zener diode; a first voltage division resistor (R17) and a second voltage division (R18); wherein a first end of the switch tube and a cathode of the voltage-regulator tube are jointly connected for connection to one output end of the light source assembly (00) a first end of the first voltage division resistor is adapted to be connected with an input end of the light source assembly (00), a second end of the first voltage division resistor, a first end of the second voltage division resistor and a control end of the switch tube are jointly connected to one switch signal output end of the control module (70), and a second end of the switch tube, an anode of the voltage-regulator tube and a second end of the second voltage division resistor are grounded jointly.

9. A dimming drive device, **characterized by** comprising the silicon-controlled-rectifier dial dual-dimming drive circuit according to any one of claims 1 to 8.

10. A lamp, **characterized by** comprising: a light source assembly (00) and the silicon-controlled-rectifier dial dual-dimming drive circuit according to any one of claims 1 to 8, wherein the silicon-controlled-rectifier dial dual-dimming drive circuit is connected with the light source assembly (00).

## Patentansprüche

1. Doppelte Dimm-Ansteuerschaltung für eine siliziumgesteuerte Gleichrichterskala für eine Lichtquellenanordnung (00), wobei die doppelte Dimm-Ansteuerschaltung für eine siliziumgesteuerte Gleichrichterskala aufweist:
einen Dimmer (10) für einen siliziumgesteuerten Gleichrichter, der konfiguriert ist, einen Wechselstrom einzuleiten und einen entsprechenden Leitungswinkel gemäß einem Steuersignal für einen siliziumgesteuerten Gleichrichter festzulegen;
ein Gleichrichtermodul (20), das mit dem Dimmer (10) für einen siliziumgesteuerten Gleichrichter verbunden ist und konfiguriert ist, ein durch den Dimmer (10) für einen siliziumgesteuerten Gleichrichter ausgegebenes Spannungssignal gleichzurichten, um einen Gleichstrom zu erzeugen;
ein Skalenschaltmodul (30), das konfiguriert ist, einen Dimm- und Farbeinstellgang auszuwählen und ein Farbeinstellsteuersignal und ein Dimmsteuersignal gemäß dem Dimm- und Farbeinstellgang auszugeben;
ein Farbtemperatursteuermodul (50), das ausgelegt ist, mit der Lichtquellenanordnung (00) verbunden zu sein, und konfiguriert ist, einen Strom jeder lichtemittierenden Einheit in der Lichtquellenanordnung (00) gemäß unterschiedlichen Schalt-Tastverhältnissen einzustellen;
ein Detektionsmodul (60) für einen siliziumgesteuerten Gleichrichter, das mit dem Gleichrichtermodul (20) verbunden ist und konfiguriert ist, den Leitungswinkel des Dimmers (10) für einen siliziumgesteuerten Gleichrichter gemäß dem Gleichstrom zu detektieren und ein Leitungswinkelsignal für einen siliziumgesteuerten Gleichrichter zu erzeugen;
und **gekennzeichnet durch**:
ein Ansteuer-Einstellmodul (40), das mit dem Gleichrichtermodul (20), dem Skalenschaltmodul (30) und der Lichtquellenanordnung (00) verbunden ist und konfiguriert ist, das Dimmsteuersignal zu empfangen, einen durch die Lichtquellenanordnung (00) ausgegebenen Strom zu sammeln und den Gleichstrom gemäß dem Dimmsteuersignal und einem Sammelergebnis einzustellen; und
ein Steuermodul (70), das mit dem Skalenschaltmodul (30), dem Ansteuer-Einstellmodul (40), dem Farbtemperatursteuermodul (50) und dem Detektionsmodul (60) für einen siliziumgesteuerten Gleichrichter verbunden ist, konfiguriert ist, ein erstes Pulsweitenmodulationssignal gemäß dem Farbeinstellsteuersignal zu erzeugen und das erste Pulsweitenmodulationssignal an das Farbtemperatursteuermodul (50) zu senden, um so ein Schalt-Tastverhältnis des Farbtemperatursteuermoduls (50) einzustellen, und ferner konfiguriert ist, ein zweites Pulsweitenmodulationssignal gemäß dem Leitungswinkelsignal für einen siliziumgesteuerten Gleichrichter zu erzeugen und das zweite Pulsweitenmodulationssignal an das Ansteuer-Einstellmodul (40) zu senden, um so den Gleichstrom einzustellen.

2. Doppelte Dimm-Ansteuerschaltung für eine siliziumgesteuerte Gleichrichterskala nach Anspruch 1, ferner aufweisend:
ein Filtermodul (81), das jeweils mit dem Gleichrichtermodul (20) und dem Ansteuer-Einstellmodul (40) verbunden ist und konfiguriert ist, durch das Gleichrichtermodul (20) ausgegebenen Gleichstrom zu filtern und eine gefilterte Gleichstromspannung an das Ansteuer-Einstellmodul (40) auszugeben.

3. Doppelte Dimm-Ansteuerschaltung für eine siliziumgesteuerte Gleichrichterskala nach Anspruch 1, ferner aufweisend:
ein Überstromschutzmodul (82), das mit dem Gleichrichtermodul (20) verbunden ist und konfiguriert ist, einen Überstromschutz an dem Wechselstrom durchzuführen.

4. Doppelte Dimm-Ansteuerschaltung für eine siliziumgesteuerte Gleichrichterskala nach Anspruch 1, ferner aufweisend:
ein Rippelentfernungsmodul (83), das mit dem Ansteuer-Einstellmodul (40) verbunden ist und mit der Lichtquellenanordnung (00) verbindbar ist und konfiguriert ist, Rippel in dem Gleichstrom zu entfernen.

5. Doppelte Dimm-Ansteuerschaltung für eine siliziumgesteuerte Gleichrichterskala nach Anspruch 1, ferner aufweisend:
ein Energiezufuhrmodul (84), das jeweils mit dem Gleichrichtermodul (20) und dem Steuermodul (70) verbunden ist und konfiguriert ist, den Gleichstrom zu empfangen und eine Spannungsumwandlung an dem Gleichstrom durchzuführen, um so dem Steuermodul (70) Energie zuzuführen.

6. Doppelte Dimm-Ansteuerschaltung für eine siliziumgesteuerte Gleichrichterskala nach Anspruch 1, wobei das Skalenschaltmodul (30) aufweist:
einen Mehrgang-Wahlschalter, eine Vielzahl von Farbeinstellwiderständen und mindestens einen Dimmwiderstand, wobei ein gemeinsames Ende des Mehrgang-Wahlschalters geerdet ist, eine Vielzahl von Schaltkontakten des Mehrgang-Wahlschalters mit ersten Enden der Vielzahl von Farbeinstellwiderständen und einem ersten Ende des mindestens einen Dimmwiderstands in Eins-zu-Eins-Entsprechung verbunden sind, zweite Enden der Vielzahl von Farbeinstellwiderständen zusammen mit dem Steuermodul (70) verbunden sind und ein zweites Ende des mindestens einen Dimmwiderstands mit dem Ansteuer-Einstellmodul (40) verbunden ist.

7. Doppelte Dimm-Ansteuerschaltung für eine siliziumgesteuerte Gleichrichterskala nach Anspruch 1, wobei das Farbtemperatursteuermodul (50) aufweist:
eine optische Kopplungseinheit, die mit dem Steuermodul (70) verbunden ist und konfiguriert ist, das erste Pulsweitenmodulationssignal zu empfangen und eine optische Kopplungs-Isolierbehandlung an dem ersten Pulsweitenmodulationssignal durchzuführen; und
eine Schalteinheit, die mit der optischen Kopplungseinheit und der Lichtquellenanordnung (00) verbunden ist und konfiguriert ist, nach der optischen Kopplungs-Isolierbehandlung gemäß dem ersten Pulsweitenmodulationssignal umgeschaltet zu werden, um so Strom jeder lichtemittierenden Einheit in der Lichtquellenanordnung (00) einzustellen.

8. Doppelte Dimm-Ansteuerschaltung für eine siliziumgesteuerte Gleichrichterskala nach Anspruch 7, wobei die Schalteinheit aufweist: eine Schaltröhre (Q4), zum Beispiel einen Transistor; eine Spannungsregelröhre, zum Beispiel eine Zener-Diode; einen ersten Spannungsteilungswiderstand (R17) und einen zweiten Spannungsteilungswiderstand (R18); wobei ein erstes Ende der Schaltröhre und eine Kathode der Spannungsregelröhre zusammen zur Verbindung mit einem Ausgangsende der Lichtquellenanordnung (00) verbunden sind, ein erstes Ende des ersten Spannungsteilungswiderstands ausgelegt ist, mit einem Eingangsende der Lichtquellenanordnung (00) verbunden zu sein, ein zweites Ende des ersten Spannungsteilungswiderstands, ein erstes Ende des zweiten Spannungsteilungswiderstands und ein Steuerende der Schaltröhre zusammen mit einem Schaltsignalausgangsende des Steuermoduls (70) verbunden sind und ein zweites Ende der Schaltröhre, eine Anode der Spannungsregelröhre und ein zweites Ende des zweiten Spannungsteilungswiderstands zusammen geerdet sind.

9. Dimm-Ansteuervorrichtung, **dadurch gekennzeichnet, dass** sie die doppelte Dimm-Ansteuerschaltung für eine siliziumgesteuerte Gleichrichterskala nach einem der Ansprüche 1 bis 8 aufweist.

10. Lampe, **dadurch gekennzeichnet, dass** sie aufweist: eine Lichtquellenanordnung (00) und die doppelte Dimm-Ansteuerschaltung für eine siliziumgesteuerte Gleichrichterskala nach einem der Ansprüche 1 bis 8, wobei die doppelte Dimm-Ansteuerschaltung für eine siliziumgesteuerte Gleichrichterskala mit der Lichtquellenanordnung (00) verbunden ist.

## Revendications

1. Circuit d'entraînement à double gradation de cadran à redresseur commandé au silicium pour un ensemble source de lumière (00), le circuit d'entraînement à double gradation de cadran à redresseur commandé au silicium comprenant :
un gradateur à redresseur commandé au silicium (10), configuré pour introduire un courant alternatif et régler un angle de conduction correspondant en fonction d'un signal de commande de redresseur commandé au silicium ;
un module de redresseur (20), connecté au gradateur à redresseur commandé au silicium (10) et configuré pour redresser un signal de tension délivré par le gradateur à redresseur commandé au silicium (10) afin de générer un courant continu ;
un module de commutateur à cadran (30), configuré pour sélectionner une roue de gradation et d'ajustement de couleur et délivrer un signal de commande d'ajustement de couleur et un signal de commande de gradation en fonction de la roue de gradation et d'ajustement de couleur ;
un module de commande de température de couleur (50), adapté pour être connecté à l'ensemble source de lumière (00) et configuré pour ajuster un courant de chaque unité électroluminescente de l'ensemble source de lumière (00) en fonction de différents rapports de cycle de commutation ;
un module de détection de redresseur commandé au silicium (60), connecté au module de redresseur (20) et configuré pour détecter l'angle de conduction du gradateur à redresseur commandé au silicium (10) en fonction du courant continu et générer un signal d'angle de conduction de redresseur commandé au silicium ; et **caractérisé par** :
un module d'ajustement d'entraînement (40), connecté au module de redresseur (20), au module de commutateur à cadran (30) et à l'ensemble source de lumière (00) et configuré pour recevoir le signal de commande de gradation, collecter un courant délivré par l'ensemble source de lumière (00) et ajuster le courant continu en fonction du signal de commande de gradation et d'un résultat de collecte ; et
un module de commande (70), connecté au module de commutateur à cadran (30), au module d'ajustement d'entraînement (40), au module de commande de température de couleur (50) et au module de détection de redresseur commandé au silicium (60), configuré pour générer un premier signal de modulation en largeur d'impulsion en fonction du signal de commande d'ajustement de couleur et envoyer le premier signal de modulation en largeur d'impulsion au module de commande de température de couleur (50) de manière à ajuster un rapport de cycle de commutation du module de commande de température de couleur (50), et configuré en outre pour générer un deuxième signal de modulation en largeur d'impulsion en fonction du signal d'angle de conduction de redresseur commandé au silicium et envoyer le deuxième signal de modulation en largeur d'impulsion au module d'ajustement d'entraînement (40) de manière à ajuster le courant continu.

2. Circuit d'entraînement à double gradation de cadran à redresseur commandé au silicium selon la revendication 1, comprenant en outre :
un module de filtrage (81), connecté au module de redresseur (20) et au module d'ajustement d'entraînement (40), respectivement, et configuré pour filtrer le courant continu délivré par le module de redresseur (20) et délivrer une tension continue filtrée au module d'ajustement d'entraînement (40).

3. Circuit d'entraînement à double gradation de cadran à redresseur commandé au silicium selon la revendication 1, comprenant en outre :
un module de protection contre les surintensités (82), connecté au module de redresseur (20) et configuré pour réaliser une protection contre les surintensités sur le courant alternatif.

4. Circuit d'entraînement à double gradation de cadran à redresseur commandé au silicium selon la revendication 1, comprenant en outre :
un module de suppression d'ondulation (83), connecté au module d'ajustement d'entraînement (40) et pouvant être connecté à l'ensemble source de lumière (00), et configuré pour supprimer les ondulations dans le courant continu.

5. Circuit d'entraînement à double gradation de cadran à redresseur commandé au silicium selon la revendication 1, comprenant en outre :
un module d'alimentation électrique (84), connecté au module de redresseur (20) et au module de commande (70), respectivement, et configuré pour recevoir le courant continu et réaliser une conversion de tension sur le courant continu, de manière à alimenter électriquement le module de commande (70).

6. Circuit d'entraînement à double gradation de cadran à redresseur commandé au silicium selon la revendication 1, dans lequel le module de commutateur à cadran (30) comprend : un commutateur de sélecteur à roues multiples, une pluralité de résistances d'ajustement de couleur et au moins une résistance de gradation, dans lequel une extrémité commune du commutateur de sélecteur à roues multiples est mise à la terre, une pluralité de contacts de commutation du commutateur de sélecteur à roues multiples sont connectés à des premières extrémités de la pluralité de résistances d'ajustement de couleur et à une première extrémité de l'au moins une résistance de gradation dans une correspondance biunivoque, des deuxièmes extrémités de la pluralité de résistances d'ajustement de couleur sont conjointement connectées au module de commande (70), et une deuxième extrémité de l'au moins une résistance de gradation est connectée au module d'ajustement d'entraînement (40).

7. Circuit d'entraînement à double gradation de cadran à redresseur commandé au silicium selon la revendication 1, dans lequel le module de commande de température de couleur (50) comprend :
une unité de couplage optique, connectée au module de commande (70) et configurée pour recevoir le premier signal de modulation en largeur d'impulsion et réaliser un traitement d'isolation de couplage optique sur le premier signal de modulation en largeur d'impulsion ; et
une unité de commutation, connectée à l'unité de couplage optique et à l'ensemble source de lumière (00) et configurée pour être commutée en fonction du premier signal de modulation en largeur d'impulsion après le traitement d'isolation de couplage optique, de manière à ajuster le courant de chaque unité électroluminescente de l'ensemble source de lumière (00).

8. Circuit d'entraînement à double gradation de cadran à redresseur commandé au silicium selon la revendication 7, dans lequel l'unité de commutation comprend : un tube de commutation (Q4), par exemple un transistor ; un tube régulateur de tension, par exemple une diode Zener ; une première résistance de division de tension (R17) et une deuxième résistance de division de tension (R18) ;
dans lequel une première extrémité du tube de commutation et une cathode du tube régulateur de tension sont conjointement connectées pour connexion à une extrémité de sortie de l'ensemble source de lumière (00), une première extrémité de la première résistance de division de tension est adaptée pour être connectée à une extrémité d'entrée de l'ensemble source de lumière (00), une deuxième extrémité de la première résistance de division de tension, une première extrémité de la deuxième résistance de division de tension et une extrémité de commande du tube de commutation sont conjointement connectées à une extrémité de sortie de signal de commutation du module de commande (70), et une deuxième extrémité du tube de commutation, une anode du tube régulateur de tension et une deuxième extrémité de la deuxième résistance de division de tension sont mises à la terre conjointement.

9. Dispositif d'entraînement à gradation, **caractérisé en ce qu'**il comprend le circuit d'entraînement à double gradation de cadran à redresseur commandé au silicium selon l'une quelconque des revendications 1 à 8.

10. Lampe, **caractérisée en ce qu'**elle comprend : un ensemble source de lumière (00) et le circuit d'entraînement à double gradation de cadran à redresseur commandé au silicium selon l'une quelconque des revendications 1 à 8, dans laquelle le circuit d'entraînement à double gradation de cadran à redresseur commandé au silicium est connecté à l'ensemble source de lumière (00).
